(19) Europäisches Patentamt
European Patent Office
Office européen des brevets

(11) Veröffentlichungsnummer: **0 010 722**
**B1**

(12) **EUROPÄISCHE PATENTSCHRIFT**

(45) Veröffentlichungstag der Patentschrift: **20.04.83**

(21) Anmeldenummer: **79104100.7**

(22) Anmeldetag: **23.10.79**

(51) Int. Cl.³: **C 09 B 29/33**, C 08 K 5/00, C 07 D 235/04, C 07 D 239/96, C 07 D 241/42

(54) **Monoazoverbindungen, Verfahren zu ihrer Herstellung und ihre Verwendung.**

(30) Priorität: **31.10.78 DE 2847285**

(43) Veröffentlichungstag der Anmeldung: **14.05.80 Patentblatt 80/10**

(45) Bekanntmachung des Hinweises auf die Patenterteilung: **20.04.83 Patentblatt 83/16**

(84) Benannte Vertragsstaaten: **CH DE FR GB**

(56) Entgegenhaltungen:
**EP - A - 0 000 737**
**FR - A - 2 233 373**
**US - A - 3 963 694**

(73) Patentinhaber: **HOECHST AKTIENGESELLSCHAFT**
**Postfach 80 03 20**
**D-6230 Frankfurt/Main 80 (DE)**

(72) Erfinder: **Fuchs, Otto, Dr.**
**Oestricher Weg 11**
**D-6000 Frankfurt am Main 71 (DE)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**EP 0 010 722 B1**

Monoazoverbindungen, Verfahren zu ihrer Herstellung und ihre Verwendung

Die Erfindung betrifft Monoazoverbindungen der allgemeinen Formel

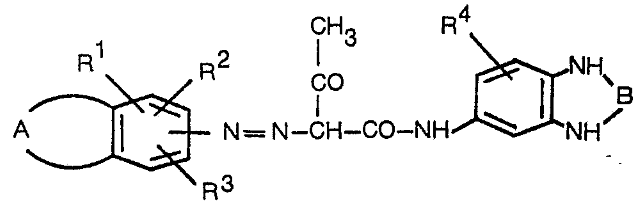

in der

A —NH—CO—NH—, —NH—CO—CO—NH— oder —NH—CO—NH—CO— bedeutet,

B —CO— oder —CO—CO— bedeutet,

$R^1$, $R^2$ und $R^3$ Wasserstoff, Chlor, Methyl, Methoxy, Äthoxy, Nitro oder eine Gruppe der Formel —COOR bedeuten, in der R Wasserstoff, Methyl oder Äthyl ist, und

$R^4$ Wasserstoff, Chlor, Methyl, Methoxy oder Äthoxy bedeutet,

mit der Maßgabe, daß, wenn B —CO— bedeutet und

1) A für —NH—CO—NH— steht,

a) $R^4$ entweder von Wasserstoff verschieden ist, oder

b) mindestens einer der Reste $R^1$, $R^2$ und $R^3$ für Nitro oder COOR steht, oder

c) mindestens zwei der Reste $R^1$, $R^2$ und $R^3$ von Wasserstoff verschieden sind,

2) A für —NH—CO—CO—NH— oder —NH—CO—NH—CO— steht,

a) $R^4$ nicht in 6-Stellung steht oder

b) mindestens einer der Reste $R^1$, $R^2$ und $R^3$ von Wasserstoff verschieden ist.

Strukturell ähnliche Verbindungen sind aus der US—A—3,963,694 bekannt. Diese Verbindungen enthalten als Kupplungskomponente Acetoacetylamino-benzimidazolone, die am Stickstoffatom in 1-Stellung alkylsubstituiert, bevorzugt methylsubstituiert sind. Solche Verbindungen weisen eine unbefriedigende Wetterechtheit und Ausblutechtheit auf.

Bevorzugt sind Verbindungen, in denen B für —CO—CO— steht, sowie Verbindungen, in denen mindestens einer der Reste $R^1$, $R^2$ und $R^3$ für Nitro oder —COOR steht, bzw. Verbindungen, in denen mindestens zwei der Reste $R^1$, $R^2$ und $R^3$ von Wasserstoff verschieden sind, und weiterhin Verbindungen, in denen B für —CO— steht und $R^4$ in 4- oder 7-Stellung steht.

Gegenstand der Erfindung ist weiterhin ein Verfahren zur Herstellung der genannten Verbindungen, das dadurch gekennzeichnet ist, daß man das Diazoniumsalz eines Amins der allgemeinen Formel

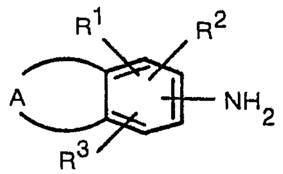

in der A, $R^1$, $R^2$ und $R^3$ die vorstehend genannten Bedeutungen haben, mit einer Verbindung der allgemeinen Formel

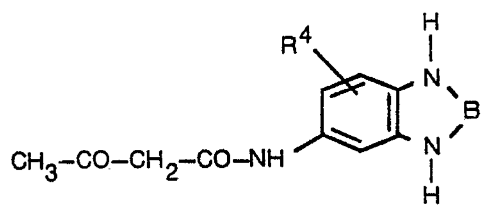

in der B und $R^4$ die oben angegebenen Bedeutungen haben, kuppelt. Die vorstehend genannten Bedeutungen für A und B schließen hierbei die entsprechenden Tautomeren ein.

Für die Amine, deren Diazoniumsalze sich zur Kupplung eignen, seien als Beispiele genannt:

5-Amino-6-methyl-benzimidazolon-(2)
5-Amino-6-methoxy-benzimidazolon-(2)
5-Amino-6-äthoxy-benzimidazolon-(2)

5-Amino-4-chlor-benzimidazolon-(2)
5-Amino-6-chlor-benzimidazolon-(2)
5-Amino-7-methyl-benzimidazolon-(2)
5-Amino-7-methoxy-benzimidazolon-(2)
5-Amino-7-chlor-benzimidazolon-(2)
5-Amino-4,6-dichlor-benzimidazolon-(2)
5-Amino-4,6,7-trichlor-benzimidazolon-(2)
5-Amino-6-nitro-benzimidazolon-(2)
5-Amino-benzimidazolon-6-carbonsäure
5-Amino-benzimidazolon-6-carbonsäuremethylester
5-Amino-benzimidazolon-6-carbonsäureäthylester
6-Amino-7-methyl-2,3-dihydroxy-chinoxalin
6-Amino-7-methoxy-2,3-dihydroxy-chinoxalin
6-Amino-7-äthoxy-2,3-dihydroxy-chinoxalin
6-Amino-5-chlor-2,3-dihydroxy-chinoxalin
6-Amino-7-chlor-2,3-dihydroxy-chinoxalin
6-Amino-5,7-dichlor-2,3-dihydroxy-chinoxalin
6-Amino-7-nitro-2,3-dihydroxy-chinoxalin
6-Amino-8-methyl-2,3-dihydroxy-chinoxalin
6-Amino-8-methoxy-2,3-dihydroxy-chinoxalin
6-Amino-8-chlor-2,3-dihydroxy-chinoxalin
6-Amino-2,3-dihydroxy-chinoxalin-7-carbonsäure
6-Amino-2,3-dihydroxy-chinoxalin-7-carbonsäuremethylester
6-Amino-2,3-dihydroxy-chinoxalin-7-carbonsäureäthylester
6-Amino-2,4-dihydroxy-chinazolin
6-Amino-7-chlor-2,4-dihydroxy-chinazolin
6-Amino-8-nitro-2,4-dihydroxy-chinazolin
7-Amino-2,4-dihydroxy-chinazolin
7-Amino-6-chlor-2,4-dihydroxy-chinazolin

Die Diazotierung der oben beispielsweise genannten Basen erfolgt nach bekannten Methoden.

Die zur Ankupplung geeigneten Acetoacetylverbindungen werden durch Umsetzung der nachstehend als Beispiele genannten Basen mit Diketen oder Acetessigester erhalten.

5-Amino-benzimidazolon-(2)
5-Amino-6-methyl-benzimidazolon-(2)
5-Amino-7-methyl-benzimidazolon-(2)
5-Amino-6-methoxy-benzimidazolon-(2)
5-Amino-7-methoxy-benzimidazolon-(2)
5-Amino-6-äthoxy-benzimidazolon-(2)
5-Amino-7-äthoxy-benzimidazolon-(2)
5-Amino-4-chlor-benzimidazolon-(2)
5-Amino-6-chlor-benzimidazolon-(2)
5-Amino-7-chlor-benzimidazolon-(2)
6-Amino-2,3-dihydroxy-chinoxalin
6-Amino-7-methyl-2,3-dihydroxy-chinoxalin
6-Amino-7-methoxy-2,3-dihydroxy-chinoxalin
6-Amino-7-äthoxy-2,3-dihydroxy-chinoxalin
6-Amino-5-chlor-2,3-dihydroxy-chinoxalin
6-Amino-7-chlor-2,3-dihydroxy-chinoxalin
6-Amino-8-methyl-2,3-dihydroxy-chinoxalin
6-Amino-8-methoxy-2,3-dihydroxy-chinoxalin
6-Amino-8-äthoxy-2,3-dihydroxy-chinoxalin
6-Amino-8-chlor-2,3-dihydroxy-chinoxalin

Die Kupplung wird in der Regel im schwach sauren Bereich, eventuell unter Zusatz von die Kupplung fördernden Substanzen, beispielsweise Dispergiermittel oder organische Lösemittel, vorgenommen. Sie läßt sich diskontinuierlich und kontinuierlich ausführen. Es ist vorteilhaft, die Suspension, nach beendeter Kupplung noch einige Zeit nachzuerhitzen, eventuell auch auf Temperaturen über 100°C unter Verwendung eines geschlossenen Druckgefäßes. Man kann auch so verfahren, daß man das rohe Pigment zunächst isoliert und wäscht und dann das isolierte salzfreie und neutrale Rohpigment einer Hitzebehandlung in wäßriger oder wäßriger lösemittelhaltiger Suspension bei Temperaturen zwischen 60—180°C, vorzugsweise 90°—150°C unterwirft.

Eine weitere Variante der Lösungsmittelnachbehandlung besteht darin, daß man den feuchten Preßkuchen mit einem geeigneten Lösungsmittel verrührt, das Wasser abdestilliert und dann die

weitgehend oder völlig wasserfreie Suspension auf Temperaturen über 100°C erhitzt, danach das Lösungsmittel mit Wasserdampf entfernt und das Pigment isoliert. Man kann das Pigment auch direkt, eventuell nach Verdünnen mit beispielsweise Methanol, aus der Lösemittelsuspension abfiltrieren, das Filtergut mit Methanol auswaschen und das Pigment trocknen. Als Lösemittel, die der Suspension zugesetzt werden können, seien beispielsweise genannt:

Toluol, Xylol, Chlorbenzol, o-Dichlorbenzol, Nitrobenzol, Pyridin, Picolin, Chinolin, Methanol, Aethanol, Isopropanol, n-Butanol, Isobutanol, Glykol-mono-methyläther, Glykol-mono-äthyläther, Diglykol-mono-methyl- oder -äthyläther, Aceton, Methyläthylketon, Dimethylformamid, Dimethylsulfoxid, Dimethylacetamid, N-Methylpyrrolidon und Tetramethylensulfon.

Die erfindungsgemäßen Produkte stellen wertvolle Pigmente dar, die sich für alle Pigmentanwendungsgebiete einsetzen lassen. Sie eignen sich hervorragend zum Pigmentieren von Einbrennlacken, in denen sie neben ausgezeichneter Licht- und Wetterechtheit eine einwandfreie Überlackierechtheit und gute Thermostabilität auch bei höchsten Einbrenntemperaturen aufweisen.

Von besonderem Interesse sind sie für das Anfärben von hochmolekularem Material wegen ihrer ausgezeichneten Migrationsechtheit und ungewöhnlich hohen Temperaturstabilität. In Polyolefinen verarbeitet, zeigen die erfindungsgemäßen Pigmente, die zwei 5-gliedrige heterocyclische Ringe im Molekül enthalten, eine für Monoazopigmente hohe Temperaturbeständigkeit, die noch erhöht wird, wenn sich ein 6-gliedriger heterocyclischer Ring im Molekül befindet, und schließlich bei Vorhandensein von zwei sechsgliedrigen heterocyclischen Ringen die höchsten Werte erreicht.

Eine derart hohe Beständigkeit konnte bisher bei Monoazopigmenten ohne verlackbare Gruppen nicht erreicht werden.

In den folgenden Beispielen beziehen sich Prozente auf das Gewicht.

### Beispiel 1

6,2 g 7-Amino-6,8-dichlor-2,3-dihydroxy-chinoxalin werden in 20 ml 30%iger Salzsäure und 20 ml Wasser bei 80°C verrührt und nach Überführung in das Hydrochlorid und Verdünnen der Suspension mit 250 ml Wasser bei 10—15°C mit Natriumnitritlösung diazotiert. 6,9 g 6-Acetoacetylamino-7-methyl-2,3-dihydroxy-chinoxalin werden in 200 ml Wasser durch Zusatz von 9 ml 30%iger Natronlauge gelöst. Diese Lösung läßt man in eine vorgelegte gerührte Lösung von 9 ml Eisessig und 0,25 g des Kondensationsproduktes von 1 Mol Stearylalkohol und 25 Mol Aethylenoxid in 100 ml Wasser langsam einfließen. In die so erhaltene Suspension läßt man unter gleichzeitiger Zugabe von 3%iger Natronlauge in der Weise, daß während der gesamten Kupplung ein pH-Wert von 4,5—5,0 aufrechterthalten wird, die geklärte Diazoniumsalzlösung langsam zutropfen.

Nach beendeter Kupplung wirdder Ansatz 30 Minuten auf 80°C erhitzt, das gebildete Rohpigment heiß abfiltriert und mit heißem Wasser gewaschen. Ausbeute: 167 g feuchter Preßkuchen.

Der feuchte Preßkuchen wird mit 140 ml Wasser und 150 g Isobutanol verrührt und in einem Druckgefäß unter Rühren 5 Stunden auf 150°C erhitzt. Nach Abkühlen unter den Siedepunkt wird das Isobutanol mit Wasserdampf abdestilliert, das Pigment abfiltriert, mit heißem Wasser gewaschen getrocknet und gemahlen.

Man erhält 13,0 g eines gelben, mikrokristallinen Pigmentpulvers. Durch Einwalzen des Pigmentes in Polyvinylchlorid lassen sich grünstichiggelbe Folien herstellen, in denen das Pigment eine einwandreie Migrationsechtheit und eine sehr gute Lichtechtheit zeigt. In Niederdruckpolyäthylen eingearbeitet, zeigen die Färbungen eine hohe Temperaturbeständigkeit.

### Beispiels 2

5,3 g 6-Amino-7-chlor-2,3-dihydroxy-chinoxalin werden durch Erwärmen mit 20 ml 30%iger Salzsäure und 20 ml Eisessig in das Hydrochlorid überführt. Zur Suspension des Hydrochlorids läßt man 3,5 ml 40%ige Natriumnitritlösung bei 0—5°C zutropfen, rührt 30 Minuten nach und verdünnt dann mit 150 ml Wasser.

Zu der aus 7,5 g 6-Acetoacetylamino-7-methoxy-2,3-dihydroxy-chinoxalin nach Angabe des Beispiels 1 zubereiteten Suspension läßt man die geklärte Diazoniumsalzlösung unter gleichzeitiger Zugabe von 3%iger Natronlauge so zutropfen, daß ein pH-Wert von 5,0—5,5 gehalten wird. Nach beendeter Kupplung wird kurz zum Sieden erhitzt, das gebildete Rohpigment abfiltriert und mit heißem Wasser gewaschen.

Ausbeute: 64,0 g feuchtes Rohpigment.

Das feuchte Rohpigment wird, wie in Beispiel 1 angegeben, weiterbehandelt. Es werden 12,3 g eines rotstichig-gelben Pulvers erhalten, das in Niederdruckpolyäthylen eingearbeitet, hohe Thermostabilität aufweist. In PVC eingewalzt, werden rotstichig-gelbe Färbungen erhalten, die sich durch völlig einwandfreie Migrationsechtheit und hohe Lichtechtheit auszeichnen.

### Beispiel 3

5,2 g 5-Amino-benzimidazol-2-on-6-carbonsäuremethylester (erhalten durch Nitrieren des Benzimidazol-2-on-carbonsäure-methylesters und Reduktion) werden in 20 ml 30%iger Salzsäure und 125 ml Wasser bei 0°C diazotiert. In einem zweiten Gefäß werden 6,7 g 5-Acetoacetylamino-6-chlor-benzimidazolon in 200 ml Wasser durch Zugabe von 9 ml 33%iger Natronlauge gelöst. Die Kupplungskomponente wird mit 9 ml Eisessig gefällt, worauf 50 ml Pyridin zugegeben werden. Die geklärte Diazoniumsalzlösung läßt man bei 20°C langsam zur Suspension der Kupplungskomponente zutropfen. Nach beendeter Kupplung wird der Ansatz 30 Minuten auf 80°C erwärmt, das Rohpigment durch Filtration isoliert und mit heißem Wasser gewaschen. Das feuchte Rohpigment wird, wie in Beispiel 1 beschrieben, nachbehandelt. Man erhält 11,8 g eines gelben Kristallpulvers.

Die unter Verwendung dieses Pigments hergestellten gelben Einbrennlackierungen weisen neben einwandfreier Überlackierechtheit eine hervorragende Licht- und Wetterchtheit auf.

In der folgenden Tabelle ist eine Reihe weiterer Beispiele angegeben, die durch Kuppeln der unter A beschriebenen Basen mit den Acetessigaryliden der unter B aufgeführten Amine erhalten werden. Unter C sind die zur Nachbehandlung verwendeten Lösemittel und unter D die bei der Einarbeitung in Polyvinylchlorid erzielten Farbtöne angegeben.

| Nr. | A | B | C | D |
|---|---|---|---|---|
| 4 | 5-Amino-6-chlor-benzimidazolon-(2) | 5-Amino-6-chlor-benzimidazolon-(2) | Methyl-äthyl-keton | orange |
| 5 | „ | 5-Amino-7-methyl-benzimidazolon-(2) | Isobutanol | orange |
| 6 | „ | 6-Amino-7-chlor-2,3-dihydroxy-chinoxalin | „ | grünst. gelb |
| 7 | „ | 6-Amino-7-methyl-2,3-dihydroxy-chinoxalin | „ | gelb |
| 8 | „ | 6-Amino-7-methoxy-2,3-dihydroxy-chinoxalin | „ | rotst. gelb |
| 9 | 5-Amino-6-nitro-benzimidazolon-(2) | 5-Amino-benzimidazolon-(2) | „ | gelb |
| 10 | 5-Amino-benzimidazol-2-on-6-carbonsäure | 5-Amino-6-chlor-benzimidazolon-(2) | „ | grünst. gelb |
| 11 | „ | 5-Amino-benzimidazolon-(2) | „ | gelb |
| 12 | „ | 6-Amino-7-methoxy-2,3-dihydroxy-chinoxalin | „ | gelb |
| 13 | „ | 5-Amino-7-chlor-benzimidazolon-(2) | „ | gelb |
| 14 | 5-Amino-benzimidazol-2-on-6-carbonsäure | 5-Amino-7-methoxy-benzimidazolon-(2) | Isobutanol | gelb |
| 15 | „ | 5-Amino-7-methyl-benzimidazolon-(2) | „ | gelb |
| 16 | „ | 6-Amino-8-methoxy-2,3-dihydroxy-chinoxalin | „ | gelb |
| 17 | 5-Amino-benzimidazol-2-on-6-carbonsäure-methylester | 6-Amino-7-chlor-2,3-dihydroxy-chinoxalin | „ | gelb |
| 18 | „ | 6-Amino-7-methyl 2,3-dihydroxy-chinoxalin | „ | gelb |

| Nr. | A | B | C | D |
|---|---|---|---|---|
| 19 | 5-Amino-benzimidazol-2-on-6-carbonsäure-äthylester | 5-Amino-benzimidazolon-(2) | Chlorbenzol | gelb |
| 20 | " | 5-Amino-6-chlor-benzimidazolon-(2) | Isobutanol | gelb |
| 21 | 5-Amino-4,6-dichlor-benzimidazolon-(2) | 5-Amino-benzimidazolon-(2) | Pyridin | grünst. gelb |
| 22 | 5-Amino-4,6,7-trichlor-benzimidazolon-(2) | 5-Amino-benzimidazolon-(2) | Isobutanol | rotst. gelb |
| 23 | " | 6-Amino-7-methoxy-2,3-dihydroxy-chinoxalin | Dimethyl-formamid | rotst. gelb |
| 24 | 6-Amino-7-chlor-2,3-dihydroxy-chinoxalin | 5-Amino-benzimidazolon-(2) | Isobutanol | rost. gelb |
| 25 | " | 5-Amino-6-chlor-benzimidazolon-(2) | " | rotst. gelb |
| 26 | " | 5-Amino-6-methyl-benzimidazolon-(2) | " | orange |
| 27 | " | 5-Amino-6-methoxy-benzimidazolon-(2) | " | orange |
| 28 | " | 5-Amino-7-chlor-benzimidazolon-(2) | " | grünst. gelb |
| 29 | " | 5-Amino-7-methyl benzimidazolon-(2) | " | gelb |
| 30 | " | 5-Amino-7-methoxy-benzimidazolon-(2) | " | gelb |
| 31 | 6-Amino-7-chlor-2,3-dihydroxy-chinoxalin | 6-Amino-2,3-dihydroxy-chinoxalin | " | gelb |
| 32 | " | 6-Amino-7-chlor-2,3-dihydroxy-chinoxalin | " | rotst. gelb |
| 33 | " | 6-Amino-7-methyl-2,3-dihydroxy-chinoxalin | " | gelb |
| 34 | " | 6-Amino-7-methoxy-2,3-dihydroxy-chinoxalin | " | rotst. gelb |
| 35 | 6-Amino-5,6-dichlor-2,3-dihydroxy-chinoxalin | 5-Amino-6-chlor-benzimidazolon-(2) | " | grünst. gelb |
| 36 | " | 5-Amino-benzimidazolon-(2) | " | rost. gelb |
| 37 | " | 6-Amino-7-methyl-2,3-dihydroxy-chinoxalin | " | gelb |
| 38 | " | 6-Amino-7-methoxy-2,3-dihydroxy-chinoxalin | " | rotst. gelb |

| Nr. | A | B | C | D |
|---|---|---|---|---|
| 39 | 6-Amino-2,3-dihydroxy-chinoxalin-7-carbonsäure | 5-Amino-benzimidazolon-(2) | Isobutanol | grünst. gelb |
| 40 | " | 5-Amino-6-chlor-benzimidazolon-(2) | " | grünst. gelb |
| 41 | " | 6-Amino-7-methyl-2,3-dihydroxy-chinoxalin | " | grünst. gelb |
| 42 | " | 5-Amino-6-methyl-benzimidazolon-(2) | " | gelb |
| 43 | " | 5-Amino-6-methoxy-benzimidazolon-(2) | " | gelb |
| 44 | " | 5-Amino-7-chlor-benzimidazolon-(2) | " | gelb |
| 45 | " | 5-Amino-7-methoxy-benzimidazolon-(2) | " | gelb |
| 46 | " | 5-Amino-7-methyl-benzimidazolon-(2) | " | rotst. gelb |
| 47 | 6-Amino-7-methyl-2,3-dihydroxy-chinoxalin | 5-Amino-benzimidazolon-(2) | " | grünst. gelb |
| 48 | " | 5-Amino-6-chlor-benzimidazolon-(2) | " | rotst. gelb |
| 49 | " | 5-Amino-6-methyl-benzimidazolon-(2) | " | rotst. gelb |
| 50 | " | 5-Amino-6-methoxy-benzimidazolon-(2) | " | orange |
| 51 | " | 5-Amino-7-chlor-benzimidazolon-(2) | " | gelb |
| 52 | " | 5-Amino-7-methyl-benzimidazolon-(2) | " | gelb |
| 53 | " | 5-Amino-7-methoxy-benzimidazolon-(2) | " | gelb |
| 54 | " | 6-Amino-7-chlor-2,3-dihydroxy-chinoxalin | " | gelb |
| 55 | 6-Amino-7-nitro-2,3-dihydroxy-chinoxalin | 5-Amino-benzimidazolon-(2) | " | orange |
| 56 | " | 5-Amino-6-chlor-benzimidazolon-(2) | " | orange |
| 57 | " | 6-Amino-7-methyl-2,3-dihydroxy-chinoxalin | " | gelb |
| 58 | " | 6-Amino-7-methoxy-2,3-dihydroxy-chinoxalin | " | orange |
| 59 | " | 5-Amino-7-chlor-benzimidazolon-(2) | " | gelb |

| Nr. | A | B | C | D |
|---|---|---|---|---|
| 60 | „ | 5-Amino-7-methyl-benzimidazolon-(2) | Isobutanol | gelb |
| 61 | „ | 6-Amino-7-methyl-2,3-dihydroxy-chinoxalin | „ | grünst. gelb |
| 62 | 6-Amino-7-chlor-2,4-dihydroxy-chinazolin | 5-Amino-benzimidazolon-(2) | „ | rotst. gelb |
| 63 | 6-Amino-8-nitro-2,4-dihydroxy-chinazolin | 5-Amino benzimidazolon-(2) | „ | gelb |
| 64 | „ | 5-Amino-6-chlor-benzimidazolon-(2) | „ | rotst. gelb |
| 65 | „ | 5-Amino-6-methyl-benzimidazolon-(2) | „ | gelb |
| 66 | „ | 6-Amino-7-methyl-2,3-dihydroxy-chinoxalin | „ | gelb |

**Patentansprüche**

1. Monoazoverbindungen der allgemeinen Formel

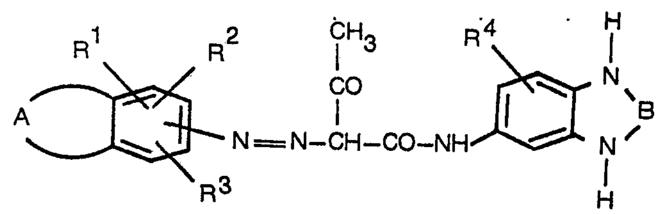

in der A —NH—CO—NH—, —NH—CO—CO—NH— oder —NH—CO—NH—CO— bedeutet, B —CO— oder —CO—CO— bedeutet, $R^1$, $R^2$ und $R^3$ Wasserstoff, Chlor, Methyl, Methoxy, Äthoxy, Nitro oder eine Gruppe der Formel COOR, in der R Wasserstoff, Methyl oder Äthyl ist, bedeuten, und $R^4$ für Wasserstoff, Chlor, Methyl, Methoxy oder Äthoxy steht, mit der Maßgabe, daß, wenn B —CO— bedeutet und

1) A für —NH—CO—NH— steht,
a) $R^4$ entweder von Wasserstoff verschieden ist, oder
b) mindestens einer der Reste $R^1$, $R^2$ und $R^3$ für Nitro oder COOR steht, oder
c) mindestens zwei der Reste $R^1$, $R^2$ und $R^3$ von Wasserstoff verschieden sind,

2) A für —NH—CO—CO—NH— oder —NH—CO—NH—CO— steht,
a) $R^4$ nicht in 6-Stellung steht oder
b) mindestens einer der Reste $R^1$, $R^2$ und $R^3$ von Wasserstoff verschieden ist.

2. Verbindungen nach Anspruch 1, in denen B für —CO—CO— steht.

3. Verbindungen nach Anspruch 1, in denen mindestens einer der Reste $R^1$, $R^2$ und $R^3$ für Nitro oder —COOR steht.

4. Verbindungen nach Anspruch 1, in denen mindestens zwei der Reste $R^1$, $R^2$ und $R^3$ von Wasserstoff verschieden sind.

5. Verbindungen nach Anspruch 1, in denen B für —CO— steht und $R^4$ in 4- oder 7-Stellung steht.

6. Verfahren zur Herstellung der Verbindungen nach Anspruch 1, dadurch gekennzeichnet, daß man Verbindungen der allgemeinen Formel

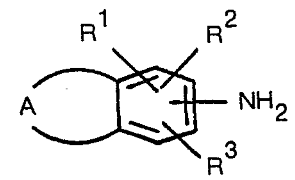

in der A, $R^1$, $R^2$ und $R^3$ die in Anspruch 1 genannten Bedeutungen haben, diazotiert und die erhaltenen Diazoniumverbindungen auf Verbindungen der allgemeinen Formel

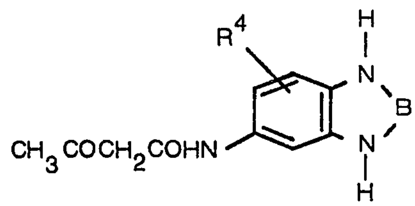

in der B und $R^4$ die im Anspruch 1 genannten Bedeutungen haben, kuppelt.

7. Verwendung der Verbindungen nach Anspruch 1 als Pigmente.

8. Verwendung der Verbindungen nach Anspruch 1 zum Pigmentieren von hochmolekularen Materialien.

**Revendications**

1. Composés monoazoïques répondant à la formule générale:

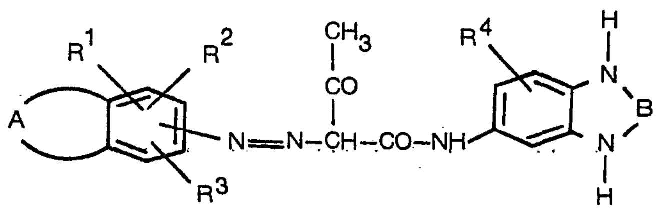

dans laquelle

A représente —NH—CO—NH—, —NH—CO—CO—NH— ou —NH—CO—NH—CO—,

B représente —CO— ou —CO—CO—,

$R^1$, $R^2$ et $R^3$ représentent chacun un atome d'hydrogène ou de chlore, un radical méthyle, méthoxy, éthoxy ou nitro ou un radical —COOR dans lequel R représente l'hydrogène ou un radical méthyle ou éthyle, et $R^4$ représente un atome d'hydrogène ou de chlore ou un radical méthyle, méthoxy ou éthoxy, avec la restriction que lorsque B est un radical —CO— et que:

1) A est un radical —NH—CO—NH—,
a) ou bien $R^4$ n'est pas l'hydrogène ou bien
b) au moins l'un des radicaux $R^1$, $R^2$ et $R^3$ est un radical nitro ou —COOR, ou bien,
c) au moins deux des radicaux $R^1$, $R^2$ et $R^3$ ne sont pas l'hydrogène,

2) A représente —NH—CO—CO—NH— ou —NH—CO—NH—CO—,
a) $R^4$ n'est pas en position 6 ou
b) au moins l'un des radicaux $R^1$, $R^2$ et $R^3$ n'est pas l'hydrogène.

2. Composés selon la revendication 1 dans lesquels B représente un radical —CO—CO.

3. Composés selon la revendication 1 dans lesquels au moins l'un des radicaux $R^1$, $R^2$ et $R^3$ est un groupe nitro ou —COOR.

4. Composés selon la revendication 1, dans lesquels au moins deux des radicaux $R^1$, $R^2$ et $R^3$ ne sont pas l'hydrogène.

5. Composés selon la revendication 1 dans lesquels B représente un radical —CO— et $R^4$ se trouve en position 4 ou en position 7.

6. Procédé de préparation des composés selon la revendication 1, caractérisé en ce qu'on diazote des composés répondant à la formule générale:

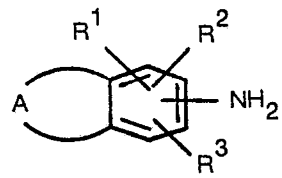

dans laquelle A, $R^1$, $R^2$ et $R^3$ ont les significations données dans la revendication 1, et on copule les composés diazoïques obtenus avec des composés répondant à la formule générale:

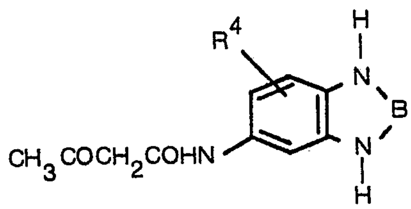

dans laquelle B et $R^4$ ont les significations données dans la revendication 1.

7. Application des composés selon la revendication 1 comme pigments.

8. Application des composés selon la revendication 1 à la pigmentation de matières à haut poids moléculaire.

**Claims**

1. Monoazo compounds of the general formula

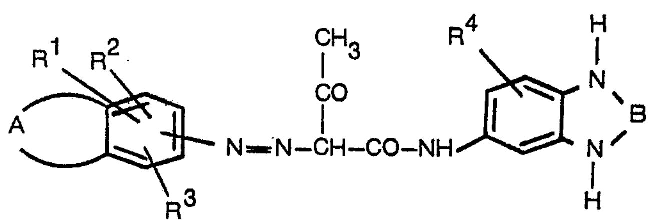

wherein A stands for —NH—CO—NH—, —NH—CO—CO—NH— or —NH—CO—NH—CO—, B stands for —CO— or —CO—CO—, $R^1$, $R^2$ and $R^3$ each stands for hydrogen, chlorine, methyl, methoxy, ethoxy, nitro or a group of the formula —COOR with R being hydrogen, methyl or ethyl and $R^4$ stands for hydrogen, chlorine, methyl, methoxy or ethoxy, with the proviso that when B stands for —CO— and when

1) A stands for —NH—CO—NH—
a) either $R^4$ is different from hydrogen, or
b) at least one of the radicals $R^1$, $R^2$ and $R^3$ stands for nitro or COOR, or
c) at least two of the radicals $R^1$, $R^2$ and $R^3$ are different from hydrogen,

2) A stands for —NH—CO—CO—NH— or —NH—CO—NH—CO—
a) $R^4$ is not in the 6-position or
b) at least one of the radicals $R^1$, $R^2$ and $R^3$ is different from hydrogen.

2. Compounds as claimed in claim 1, wherein B stands for —CO—CO—.

3. Compounds as claimed in claim 1, wherein at least one of the radicals $R^1$, $R^2$ and $R^3$ stands for nitro or —COOR.

4. Compounds as claimed in claim 1, wherein at least two of the radicals $R^1$, $R^2$ and $R^3$ are different from hydrogen.

5. Compounds as claimed in claim 1, wherein B stands for —CO— and $R^4$ is in the 4- or 7-position.

6. Process for preparing the compounds according to claim 1, characterized by diazotizing compounds of the general formula

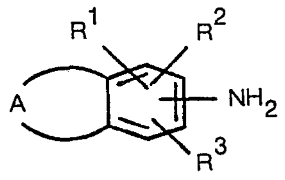

wherein A, $R^1$, $R^2$ and $R^3$ are defined as in claim 1, and coupling the so-obtained diazonium compounds with compounds of the general formula

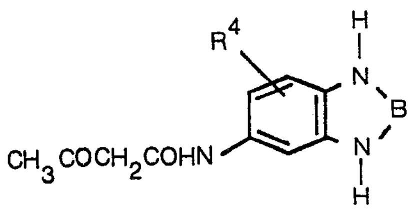

wherein B and $R^4$ are defined as in claim 1.

7. Use of the compounds according to claim 1 as pigments.
8. Use of the compounds according to claim 1 for pigmenting high-molecular material.